Europäisches Patentamt

European Patent Office

Office européen des brevets

(11) Publication number: **0 112 255**
**B1**

## EUROPEAN PATENT SPECIFICATION

(45) Date of publication of patent specification: **20.05.87**

(51) Int. Cl.⁴: **F 16 D 65/02**

(21) Application number: **83402427.5**

(22) Date of filing: **15.12.83**

(54) A spring for a disc brake.

(30) Priority: **16.12.82 US 450504**

(43) Date of publication of application:
**27.06.84 Bulletin 84/26**

(45) Publication of the grant of the patent:
**20.05.87 Bulletin 87/21**

(84) Designated Contracting States:
**DE FR GB IT**

(56) References cited:
GB-A-2 013 803
US-A-3 887 044
US-A-3 941 216
US-A-4 082 166

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Gumkowski, Bert A.**
**26219 Swallow Ct.**
**South Bend Indiana 46619 (US)**
Inventor: **Oltmanns, Roger W., Jr.**
**24669 Kerr Road**
**South Bend Indiana 46614 (US)**

(74) Representative: **Timoney, Ian Charles Craig et al**
**Service Brevets Bendix 44, rue François 1er**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a spring arrangement in a disc brake wherein a caliper cooperates with a pair of friction elements to urge the latter into engagement with a rotor to be braked. A torque member movably supports the caliper and opposes the pair of friction elements to absorb braking torque developed when the pair of friction elements are engaged with the rotor.

In order to attach the pair of friction elements to the caliper when the latter is separate from the torque member and rotor, it has been proposed to utilize a spring extending from an outer friction element to the caliper and a clip extending from an inner friction element to a piston carried by the caliper. With the clip and spring, it is possible to attach the inner and outer friction elements to the caliper for shipping to a destination where the caliper will be assembled with a torque member and rotor so that the friction elements fit on opposite sides of the rotor.

The prior art is illustrated by United States Patent 4,082,166.

When the caliper is assembled to the torque member, the outer friction element will be positioned in abutment with the torque member so that torque developed by the outer friction element, as well as the inner friction element, will be transferred to the torque member. In order to easily attach the caliper and friction elements to the torque member, there are clearances provided. However, these clearances with respect to the outer friction element result in rattle noises. It is desirable to eliminate or reduce these noises in the absence of further parts or major modifications to the disc brake.

The present invention provides a spring arrangement in a disc brake wherein a pair of friction elements are urged into engagement with a rotor by a caliper during braking and a torque member movably supports the caliper assembly and opposes the pair of friction elements to prevent rotation of the latter with the rotor, and the spring is engageable with one of the pair of the pair of friction elements and the caliper to yieldably oppose separation therebetween, characterized by said spring further cooperating with said caliper and said one friction element to bias the latter in one direction, corresponding to the direction of rotation of the rotor at the caliper, into a substantially anti-rattle abutment with said torque member.

It is an advantage of the present invention that an existing spring for attaching the outer friction element to the caliper is slightly modified to substantially reduce rattle for the outer friction element. In addition, only minor alterations are required for the caliper to provide an abutment surface engageable with the spring.

The invention will now be described with reference to the accompanying drawings wherein:

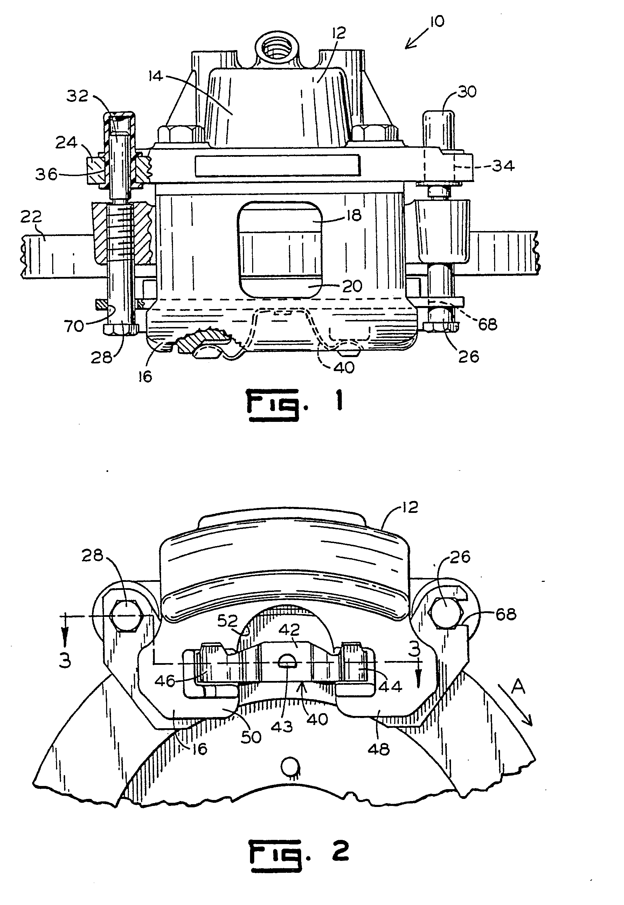

Figure 1 is a top view of a disc brake;

Figure 2 is a side view of the brake shown in Figure 1;

Figure 3 is an enlarged cut away view of the encircled portion in Figure 1, and

Figure 4 is a partially exploded view of the spring and friction element.

A disc brake 10 includes a caliper 12 with a hydraulic actuator portion 14 and a reaction portion 16. The caliper 12 cooperates with a pair of brake shoes 18 and 20 to urge the latter into engagement with a rotor 22 in a conventional manner by moving friction element 18 directly into engagement with the rotor so that the caliper moves relative to the rotor to engage friction element 16 therewith. In order to movably support the caliper relative to the rotor, a torque member 24 is fixedly disposed adjacent the rotor. The torque member includes a pair of pins 26 and 28 with ends 30 and 32 extending through caliper openings 34 and 36 via suitable bushings so that the caliper slides on the ends 30 and 32.

The inner friction element 18 is releasably attached to a piston (not shown) of the hydraulic actuator portion 14 via a clip (not shown) or other attaching means. The outer friction element 20 is releasably attached to the reaction portion 16 of the caliper by a plate spring 40. The plate spring 40 includes a central portion 42 secured to friction element 20 via an extrusion 43 and a pair of arms 44 and 46. The arm 44 resiliently engages a caliper leg 48 and the arm 46 resiliently engages a caliper by 50 in a manner hereinafter described. The legs 48 and 50 form a recess or opening 52 through which the arms 44 and 46 extend.

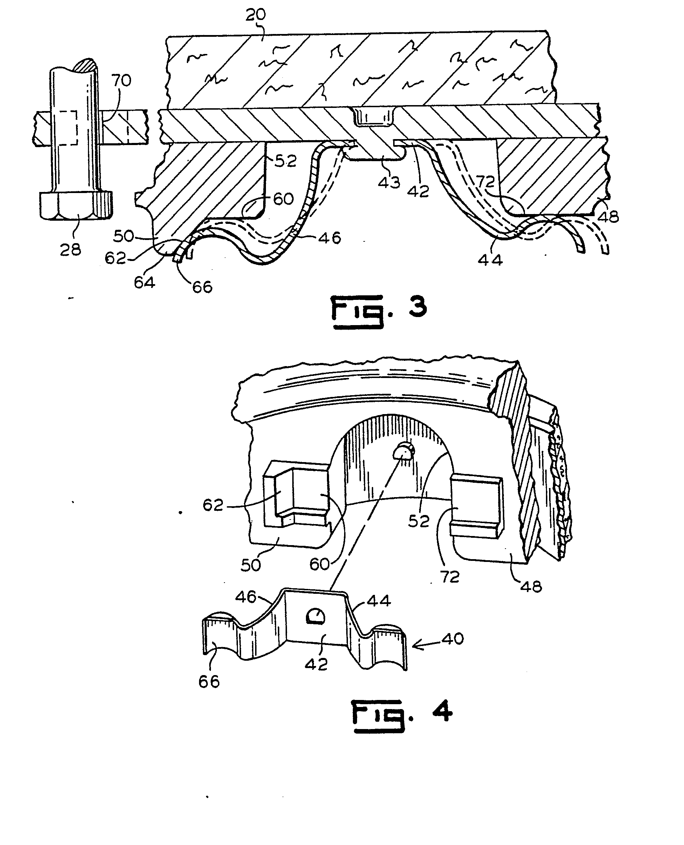

The leg 50 defines a flat surface 60 adjoining a tapered surface 62 which is formed by an outwardly extending boss 64 on the leg 50. The plate spring arm 56 includes an arcuate end 66 forming a half circle substantially. As shown in Figure 3, the end 66 is engageable with the flat surface 60 and the tapered surface 62 when the caliper and pair of brake shoes are separate from the torque member. When the caliper 12 is assembled to the torque member, the pins 26 and 28 extend through a slot 68 and an opening 70, respectively, formed on the outer friction element. In this position, the spring arm is deflected as shown in dotted lines in Figure 3 so that the arcuate end is moved to a position spaced from the flat surface 60 and solely engaging the tapered surface 62. The arm 44 remains in engagement with a substantially flat surface 72 formed on the caliper leg 48. In reponse to the engagement between the end 66 and the tapered surface 62, the spring 40 is biased to move in the direction A corresponding to the direction of rotation for the rotor at the caliper. Consequently, the spring 40 and outer friction element are moved in the direction A to contact the wall of opening 70 with the outer surface of pin 28 and resiliently retain the wall in contact with the pin even when the caliper is vibrating during vehicle operation. Therefore, any vibration between the outer friction element and the pin is substantially eliminated to, in turn, substantially eliminate rattling noises by the outer friction element.

In view of the foregoing description, it is seen that the spring 40 needs only a slight modification at the end 66 and the caliper requires a tapered surface to provide for the anti-rattle feature described for the outer friction element 20.

## Claims

1. A spring arrangement in a disc brake (10) wherein a pair of friction elements (18, 20) are urged into engagement with a rotor (22) by a caliper (12) during braking, and a torque member (24, 26, 28) movably supports the caliper assembly (12) and opposes the pair of friction elements (18, 20) to prevent rotation of the latter with the rotor (22), and a spring (40) is engageable with one (20) of the pair of friction elements and the caliper (12) to yieldably oppose separation therebetween, characterized by said spring (40) further cooperating with said caliper (12) and said one friction element (20) to bias the latter in one direction (A), corresponding to the direction of rotation of the rotor (22) at the caliper (12), into a substantially antirattle abutment with said torque member (24, 26, 28).

2. The spring arrangement of claim 1 in which said caliper (12) defines an outwardly extending boss (64) and one end (66) of said spring (40) is engageable with said boss (64) to load said spring (40) in the one direction, whereby said one friction element (20) is also resiliently biased in the one direction.

3. The spring arrangement of claim 2 in which said boss (64) defines a tapered surface (62) which is engageable with said one end (66) of said spring (40).

4. The spring arrangement of claim 3 in which said tapered surface (62) leads to a flat surface (60) extending substantially parallel to said rotor (22), said one end of said spring (40) being engageable with said flat (60) and said tapered (62) surfaces when said pair of friction elements (18, 20) and said caliper (12) are remote from said torque member (24, 26, 28) and said one end (66) of said spring (40) being engageable only with said tapered surface (62) when said caliper (12) and said pair of friction elements (18, 20) are cooperating with said torque member (24, 26, 28).

## Patentansprüche

1. Federanordnung in einer Scheibenbremse (10), bei der zwei Reibbacken (18, 20) während des Bremsvorganges durch einen Bremssattel (12) in Anlage mit einer Bremsscheibe (22) drückbar sind und ein Bremsträger (24, 26, 28) die Bremssattelanordnung (12) beweglich abstützt und den beiden Reibbacken (18, 20) entgegenwirkt, um eine Drehung derselben zusammen mit der Bremsscheibe (22) zu verhindern, und eine Feder (40), die mit einem (20) der beiden Bremsbacken und dem Bremssattel (12) in Eingriff bringbar ist, um einer Trennung derselben elastisch entgegenzuwirken, dadurch gekennzeichnet, daß die Feder (40) außerdem mit dem Bremssattel (12) und dem besagten einen Bremsbacken (20) zusammenwirkt, um den letzteren in einer der Drehrichtung der Bremsscheibe (22) am Bremssattel (12) entsprechenden Richtung (A) in eine ein Rattern im wesentlichen unterbindende Anlage mit dem Bremsträger (24, 26, 28) vorzuspannen.

2. Federanordnung nach Anspruch 1, dadurch gekennzeichnet, daß der Bremssattel (12) einen nach außen verlaufenden Vorsprung (64) definiert, wobei ein Ende (66) der Feder (40) gegen den Vorsprung (64) anlegbar ist, um die Feder (40) in der einen Richtung zu belasten, wodurch der eine Bremsbacken (20) in die eine Richtung ebenfalls vorgespannt wird.

3. Federanordnung nach Anspruch 2, dadurch gekennzeichnet, daß der Vorsprung (64) eine konische Fläche (62) definiert, die gegen das eine Ende (66) der Feder (40) anlegbar ist.

4. Federanordnung nach Anspruch 3, dadurch gekennzeichnet, daß die konische Fläche (62) zu einer ebenen Fläche (60) verläuft, die sich im wesentlichen parallel zur Bremsscheibe (22) erstreckt, wobei das eine Ende der Feder (40) gegen die ebene (60) und die konische (62) Fläche anlegbar ist, wenn die beiden Bremsbacken (18, 20) und der Bremssattel (12) vom Bremsträger (24, 26, 28) entfernt sind, und das eine Ende (66) der Feder (40) nur gegen die konische Fläche (62) anlegbar ist, wenn der Bremssattel (12) und die beiden Bremsbacken (18, 20) mit dem Bremsträger (24, 26, 28) zusammenwirken.

## Revendications

1. Dispositif à ressort dans un frein à disque (10) dans lequel deux éléments de friction (18, 20) sont sollicités en contact avec un rotor (22) par un étrier (12) pendant le freinage et un élément de réaction de couple (24, 26, 28) supporte l'étrier (12) de façon mobile et s'oppose aux deux éléments de friction (18, 20) pour les empêcher de tourner avec le rotor (22) et un ressort (40) peut être engagé avec un (20) des deux éléments de friction et avec l'étrier (12) afin de s'opposer élastiquement à leur séparation, caractérisé en ce que le ressort (40) coopère en outre avec l'étrier (12) et le dit élément de friction (20) afin de solliciter cet élément dans une direction (A), correspondant au sens de rotation du rotor (22) au niveau de l'étrier (12), en un contact en substance anticliquetis avec l'élément de réaction de couple (24, 26, 28).

2. Dispositif à ressort suivant la revendication 1, dans lequel l'étrier (12) définit un bossage (64) qui s'étend vers l'extérieur et une extrémité (66) du ressort (40) peut être engagée avec le bossage (64) pour mettre le ressort (40) en charge dans la dite direction, le dit élément de friction (20) étant également rappelé élastiquement dans cette direction.

3. Dispositif à ressort suivant la revendication 2, dans lequel le bossage (54) définit une surface inclinée (62) qui peut être engagée avec la dite extrémité (66) du ressort (40).

4. Dispositif à ressort suivant la revendication 3, dans lequel la surface inclinée (62) se raccorde à une surface plane (60) qui s'étend en substance parallèlement au rotor (22), la dite extrémité du ressort (40) pouvant être engagée avec la surface plane (60) et la surface inclinée (62) lorsque les deux éléments de friction (18, 20) et l'étrier (12) sont éloignés de l'élément de réaction de couple (24, 26, 28) et la dite extrémité (66) du ressort (40) ne pouvant être engagée avec la surface inclinée (62) que lorsque l'étrier (12) et les deux éléments de friction (18, 20) coopèrent avec l'élément de réaction de couple (24, 26, 28).

0 112 255

Fig. 1

Fig. 2

1

Fig. 3

Fig. 4